# EUROPÄISCHE PATENTANMELDUNG

(11) **EP 3 842 470 A1**
(43) Veröffentlichungstag der Anmeldung: **30.06.2021**
(21) Anmeldenummer: 19219338.1
(22) Anmeldetag: 23.12.2019
(51) Int. Cl.: C08G 69/26, C08L 77/08

(54) **POLYAMID-FORMMASSEN FÜR HYPOCHLORIT-BESTÄNDIGE ANWENDUNGEN**

(71) Anmelder: EMS-CHEMIE AG, 7013 Domat/Ems (CH)
(72) Erfinder: ALKAN, Arda, 7013 Domat/Ems (CH); WIEDEMANN, Thomas, 7013 Domat/Ems (CH); CADALBERT, Andri, 7402 Bonaduz (CH); HEWEL, Manfred, 7013 Domat/Ems (CH); HOFFMANN, Botho, 7013 Domat/Ems (CH)
(74) Vertreter: Pfenning, Meinig & Partner mbB

(57) **Zusammenfassung**

Die vorliegende Erfindung betrifft die Verwendung einer Polyamid-Formmasse für Anwendungszwecke, in denen eine hohe Beständigkeit gegen Hypochlorige Säure maßgeblich ist. Die Formmasse wird somit erfindungsgemäß für Formkörper, die für den Kontakt mit wässrigen, Hypochlorige Säure enthaltenden Lösungen geeignet sind, verwendet.

## Beschreibung

Die vorliegende Erfindung betrifft die Verwendung einer Polyamid-Formmasse für Anwendungszwecke, in denen eine hohe Beständigkeit gegen Hypochlorige Säure maßgeblich ist. Die Formmasse wird somit erfindungsgemäß für Formkörper, die für den Kontakt mit wässrigen, Hypochlorige Säure enthaltenden Lösungen geeignet sind, verwendet.

Die EP 1 291 073 A1 betrifft Polyamid-Mikrokapseln, die durch Kontaktieren von wässrigen Phasen, die Diamine und anionische Polymere und/oder Heteropolysaccharide in gelöster Form enthalten, mit Ölphasen, die gelöste Dicarbonsäurehalogenide enthalten, unter Bildung einer W/O-Emulsion, Aushärten mit einer Calciumsalzlösung sowie Filtern, Waschen und Trocknen erhalten werden. Die Polyamid-Mikrokapseln werden als gegenüber Hypochloritlauge stabil beschrieben und für die Zwecke von Kosmetika verwendet.

Die EP 3 502 188 A1 betrifft eine Polyamid-Formmasse insbesondere zur Verwendung im Trinkwasserbereich, das heißt zur Herstellung von Formteilen, bei welchen beim bestimmungsgemäßem Gebrauch die verarbeitete Formmasse in Kontakt mit Trinkwasser tritt. Eine Beständigkeit gegenüber Hypochlorit wird allerdings nicht genannt, noch ein Einsatzbereich der Polyamid-Formmasse für Formkörper, die im bestimmungsgemäßem Gebrauch in Kontakt mit Hypochlorit-enthaltenden Lösungen treten, genannt.

Die EP 3 369 761 A1 betrifft ein amorphes oder mikrokristallines Copolyamid (A) welches die folgenden Monomere enthält: (a) mindestens ein cycloaliphatisches Diamin; (b) 0,25 bis 4,4 Mol-% mindestens einer dimeren Fettsäure; und (c) 12 bis 49,75 Mol-% mindestens einer aromatischen Dicarbonsäure ausgewählt aus der Gruppe bestehend aus Isophthalsäure, Terephthalsäure und Naphthalindicarbonsäure, und (d) 0 bis 37,75 Mol-% mindestens einer aliphatischen Dicarbonsäure; wobei der molare Anteil an Isophthalsäure mindestens gleich dem molaren Anteil an Terephthalsäure ist, und wobei sich die Monomere (b), (c) und gegebenenfalls (d) zu 50 Mol-% addieren und sich die molaren Anteile aller im Copolyamid (A) enthaltenen Monomere auf 100 Mol-% ergänzen. Weiterhin betrifft die Erfindung Formmassen enthaltend das Copolyamid (A), Formkörper daraus und deren Verwendung. Die Anwendung der genannten Polyamid-Formmassen beschränkt sich allerding auf Gebiete, in denen kein Kontakt mit Hypochlorit-enthaltenden Lösungen stattfindet. Eine Stabilität der Formmasse gegenüber Hypochlorit-enthaltenden Lösungen wird nicht genannt.

Aus der EP 0 469 435 A1 sind Copolyamide bekannt, die sich zur Herstellung von Formkörpern mit hoher Glasumwandlungstemperatur, Steifigkeit und Schlagzähigkeit bei geringer Feuchtigkeitsaufnahme auszeichnen. Zudem wird ein Verfahren zur Herstellung dieser Copolyamide wie ihre Verwendung zur Herstellung von Formkörpern offenbart.

Ausgehend hiervon war es Aufgabe der vorliegenden Erfindung, geeignete Polyamide zu finden, die eine Verwendung ermöglichen, bei denen die Zusammensetzung im Gebrauch Hypochlorit-enthaltenden Lösungen ausgesetzt ist. Die Verwendung soll hierbei eine verbesserte Stabilität gegenüber aus dem Stand der Technik bekannten Anwendungen ermöglichen. Hierbei bedeutet eine verbesserte Stabilität eine möglichst gering ausfallende Gewichtsänderung bei Lagerung der erfindungsgemäßen Formmassen in Hypochlorit-enthaltenden Lösungen. Bei transparenten Copolyamid-Formmassen bedeutet eine verbesserte Stabilität insbesondere einen verbesserten Erhalt der Clarity der Formmasse. Bei nicht-transparenten Copolyamid-Formmassen, z.B. bei mit Füllstoffen versehenen Formmassen, zeichnet sich eine verbesserte Stabilität insbesondere durch einen verbesserten Erhalt der Mechanik, insbesondere der Reißkraft aus.

Diese Aufgabe wird mit den Merkmalen des Patentanspruchs 1 gelöst. Die abhängigen Patentansprüche beschreiben vorteilhafte Weiterbildungen.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 1874-1 (2011, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACM für Bis(4-amino-cyclohexyl)methan (auch als 4,4'-Diaminodicyclohexylmethan bezeichnet, CAS-Nr. 1761-71-3), T für Terephthalsäure (CAS-Nr. 100-21-0), I für Isophthalsäure (CAS-Nr. 121-95-5), 36 für dimere Fettsäure mit 36 Kohlenstoffatomen (CAS-Nr. 68783-41-5 oder 61788-89-4), 12 für Dodecandisäure (auch 1,10-Decandicarbonsäure genannt, CAS-Nr. 693-23-2), CHD für 1,4- Cyclohexandicarbonsäure (CAS-Nr. 1076-97-7).

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 30 J/g, besonders bevorzugt von maximal 25 J/g, ganz besonders bevorzugt 0 bis 22 J/g.

Mikrokristalline Polyamide sind teilkristalline Polyamide und besitzen daher einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 75 % beträgt, gemessen nach ASTM D 1003-13 (2013).

Bei den für die erfindungsgemäße Polyamid-Formmasse verwendeten mikrokristallinen Polyamiden beträgt der Schmelzpunkt gemessen nach ISO 11357 (2013) bevorzugt maximal 255 °C.

Amorphe Polyamide weisen, verglichen mit den mikrokristallinen Polyamiden, eine geringere Schmelzwärme auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keinen Schmelzpunkt.

Amorphe Polyamide sind transparent, d.h. ihre Lichttransmission beträgt mindestens 80 %, bevorzugt mindestens 85 %, besonders bevorzugt mindestens 90 % gemessen an 2 mm dicken Platten nach ASTM D 1003-13 (2013).

### Intransparent, opak

Im Sinne der vorliegenden Erfindung wird unter intransparent bzw. opak eine Lichttransmission von unter 80 % verstanden, gemessen an 2 mm dicken Platten nach ASTM D 1003-13 (2013).

### Dimere Fettsäure

Im Sinne der vorliegenden Erfindung weisen dimere Fettsäuren (b) zumindest 28 Kohlenstoffatome (C-Atome) auf. Sie werden durch Dimerisierung ungesättigter Monocarbonsäuren zu Dicarbonsäuren gewonnen, wobei die Dimerisierung bevorzugt katalytisch durchgeführt wird. Dimere Fettsäuren gemäß vorliegender Erfindung sind Dicarbonsäuren. Bevorzugt sind die dimeren Fettsäuren teilweise gesättigt, besonders bevorzugt sind sie vollständig gesättigt.

### Aliphatische Dicarbonsäure

Unter den aliphatischen Dicarbonsäuren (d) im Sinne vorliegender Erfindung werden Dicarbonsäuren mit 6 bis 22 Kohlenstoffatomen verstanden. Diese können linear, verzweigt oder cycloaliphatisch sein und liegen in gesättigter Form vor.

### Mengenangaben der Monomere

Die erfindungsgemässen Copolyamide enthalten nur Dicarbonsäuren und Diamine. Deren molare Mengen ergänzen sich auf 50 Mol-% für die Summe aller Diamine und 50 Mol-% für die Summe aller Dicarbonsäuren und die Summe der Diamin- und Dicarbonsäure-Mengen ergibt 100 Mol-% für das Copolyamid.

Bei den Mengenangaben zu den Dicarbonsäuren und Diaminen der Copolyamide gilt, dass die Summe der molaren Mengen aller Diamine im Wesentlichen gleich der Summe der molaren Mengen aller Dicarbonsäuren ist. Im Wesentlichen gleich bedeutet dabei einen maximalen Überschuss der Dicarbonsäuren oder der Diamine von 3 %, d.h. das molare Verhältnis von Dicarbonsäuren zu Diaminen beträgt 1,03 : 1 bis 1 : 1,03. Bevorzugt ist ein maximaler Überschuss der Dicarbonsäuren oder der Diamine von 2 %, d.h. das molare Verhältnis von Dicarbonsäuren zu Diaminen beträgt 1,02 : 1 bis 1 : 1,02. Der Überschuss dient zum Ausgleich von Verlusten an Monomer und/oder zur Regelung der relativen Viskosität des Polyamides und somit der Molmasse.

Die Mengenangaben bezüglich der Monomere sind dabei so zu verstehen, dass sich ein entsprechendes Molverhältnis dieser bei der Polykondensation eingesetzten Monomere auch in den derart durch Polykondensation hergestellten Copolyamiden wiederfindet.

### Allgemeines zu Mengenangaben

Die Formmassen gemäß der vorliegenden Erfindung enthalten bevorzugt nur die Komponenten (A), (C) und gegebenenfalls (B), es gilt dabei die Maßgabe, dass sich die Komponenten (A), (C) und gegebenenfalls (B) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe der Komponenten (A) bis (C) 100 Gew.-% ergibt.

Die Mengenangaben der im Copolypolyamid (A) enthaltenen Diamine und Dicarbonsäuren addieren sich jeweils zu 50 Mol-%. Alle im Copolypolyamid (A) enthaltenen Monomere ergänzen sich in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (A) enthaltenen Monomeren 100 Mol-% ergibt.

### Hypochlorige Säure, Hypochlorit

Im Sinne der vorliegenden Erfindung werden beide Begriffe in Bezug auf wässrige Lösungen oder Beständigkeit synonym verwendet, da wässrige Lösungen davon beide Spezies in einem Gleichgewicht enthalten.

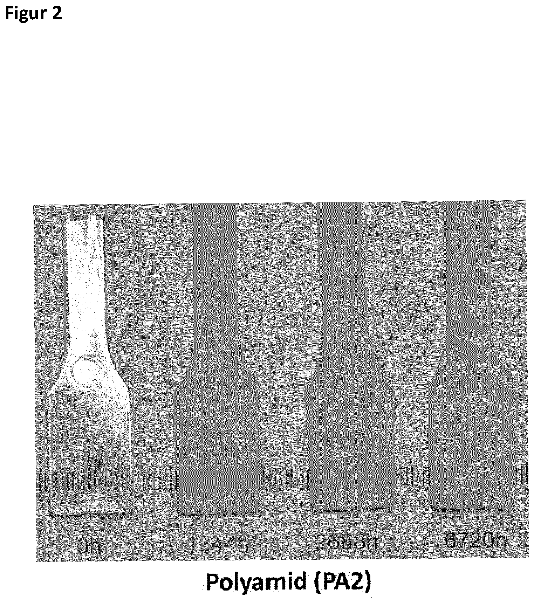

Dieses Gleichgewicht zwischen Hypochloriger Säure und Hypochlorit ist pH-Wert abhängig (siehe Bildungskinetik von Wasserdesinfektionsnebenprodukten - Dissertation von Tim Schlosser, Heidelberg 2018, Seite 36 - 37) und liegt bei einem pH von 6,8 auf Seiten der Hypochlorigen Säure. Aus dem Hägg-Diagramm für den nach DIN 19643 (Aufbereitung von Schwimm- und Badebeckenwasser) relevanten pH-Bereich 6,5 ≤ pH ≥ 7,8 (Abbildung 2.5, Seite 37) lässt sich eine Zusammensetzung von ca. 80 % Hypochlorige Säure und ca. 20 % Hypochlorit für einen pH-Wert von 6,8 ablesen.

### Hypochlorit-enthaltende Lösungen

Im Sinne der vorliegenden Erfindung umfasst der Begriff "Hypochlorit-enthaltende Lösungen" Lösungen von Hypochloritionen (z.B. einer Lösung von Natriumhypochlorit oder hypochloriger Säure) in Wasser und somit eine Mischung von Hypochloriger Säure und Hypochlorit, wobei deren Konzentrationsverhältnis pH-Wert abhängig ist.

### Hypochlorit-Lagerung

Im Sinne der vorliegenden Erfindung umfasst der Begriff "Hypochlorit-Lagerung" die Lagerung von Prüfkörpern (Zugstäben) in einer Lösung von Hypochloritionen (z.B. einer Lösung von Natriumhypochlorit oder hypochloriger Säure) in Wasser und damit in einer Mischung von Hypochloriger Säure und Hypochlorit, wobei deren Konzentrationsverhältnis pH-Wert abhängig ist.

Die vorliegende Erfindung betrifft somit die Verwendung einer Copolyamid-Formmasse, umfassend mindestens ein amorphes oder mikrokristallines Copolyamid (A), welches folgende Monomere enthält:
(a) mindestens ein cycloaliphatisches Diamin;
(b) 0,25 bis 10 Mol-% mindestens einer dimeren Fettsäure; und
(c) 12 bis 49,75 Mol-% mindestens einer aromatischen Dicarbonsäure ausgewählt aus der Gruppe bestehend aus Isophthalsäure, Terephthalsäure und Naphthalindicarbonsäure, und
(d) 0 bis 37,75 Mol-% mindestens einer aliphatischen Dicarbonsäure;
wobei der molare Anteil an Isophthalsäure mindestens gleich dem molaren Anteil an Terephthalsäure ist, und
wobei sich die Monomere (b), (c) und gegebenenfalls (d) zu 50 Mol-% addieren und sich die molaren Anteile aller im Copolyamid (A) enthaltenen Monomere auf 100 Mol-% ergänzen,
zur Herstellung von gegenüber wässrigen, Hypochlorige Säure und/oder deren Salzen enthaltenden Lösungen beständigen Formkörpern.

Beständig bedeutet eine Gewichtsänderung des gelagerten Formkörpers nach 8064 h Lagerung, gemessen wie auf Seite 17 beschrieben, von maximal 2 %, bevorzugt von maximal 1,5 %, besonders bevorzugt von maximal 1 %
und/oder
eine Reißkraft des gelagerten Formkörpers nach 8064 h Lagerung, gemessen wie auf Seite 17 beschrieben, von mindestens 70%, bevorzugt 75 %, besonders bevorzugt 80 % des Wertes der Reißkraft des ungelagerten Prüfkörpers.

Überraschenderweise wurde bei der Suche nach geeigneten Polyamiden, die die oben genannte Aufgabe lösen können, gefunden, dass die im Anspruch 1 genannten Polyamide eine hohe Resistenz gegenüber Hypochlorit-enthaltenden Lösungen aufweisen und somit für die erfindungsgemäßen Zwecke geeignet sind.

Eine bevorzugte Ausführungsform der erfindungsgemäßen Verwendung sieht die Verwendung zur Herstellung eines Formkörpers, ausgewählt aus der Gruppe bestehend aus Bauteilen zur Förderung und/oder Aufbewahrung von Trinkwasser oder Warmwasser, Bauteilen in Schwimmbädern, Whirlpools, Heizungsanlagen oder im Sanitärbereich (Küche, Bad, Sauna, Toilette), Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (Schaufelräder, Impeller), Sichtscheiben, Abdeckungen, Leitungen oder Behälter sowie Bestandteile oder Elemente davon, vor.

Besonders bevorzugt enthält das mindestens eine amorphe oder mikrokristalline Copolyamid (A) die folgenden Monomere mit den folgenden Mol-Anteilen:
40 bis 50 Mol-%, bevorzugt 48 bis 50 Mol-% und insbesondere bevorzugt 50 Mol-% cycloaliphatisches Diamin (a); und
1 bis 7,5 Mol-%, bevorzugt 1,5 bis 4,4 Mol-%, insbesondere bevorzugt 1,7 bis 3,0 Mol-% dimere Fettsäure (b); und
14 bis 44 Mol-%, bevorzugt 23 bis 38,5 Mol-%, besonders bevorzugt 25,5 bis 33,3 Mol-% aromatische Dicarbonsäure (c); und gegebenenfalls 5 bis 35 Mol-%, bevorzugt 10 bis 25,5 Mol-% und besonders bevorzugt 15 bis 22,8 Mol-% aliphatische Dicarbonsäure (d);
wobei sich die Anteile aller im Copolyamid (A) enthaltenen Monomere auf 100 Mol-% ergänzen.

Die erfindungsgemäße Verwendung sieht vorteilhafterweise weiter vor, dass das mindestens eine amorphe oder mikrokristalline Copolyamid (A) als aromatische Dicarbonsäure (c) Isophthalsäure und bevorzugt auch Terephthalsäure enthält, wobei
der Anteil an Isophthalsäure bezogen auf die Summe aller Monomere im Copolyamid (A) 6 bis 49,75 Mol-%, bevorzugt 7 bis 44 Mol-%, besonders bevorzugt 11,5 bis 27 Mol-% und insbesondere bevorzugt 12,75 bis 20,55 beträgt und/oder
der Anteil an Terephthalsäure bezogen auf die Summe aller Monomere im Copolyamid (A) 0 bis 24,875 Mol-%, bevorzugt 0 bis 22 Mol-%, besonders bevorzugt 11,5 bis 19,25 Mol-% und insbesondere bevorzugt 12,75 bis 16,65 Mol-% beträgt.

Vorteilhaft ist zudem, dass das mindestens eine amorphe oder mikrokristalline Copolyamid (A)
eine Glasübergangstemperatur gemessen nach ISO 11537-2 (2013) an Granulat mit einem Wassergehalt von unter 0,1 Gew.-% von mindestens 155° C, bevorzugt mindestens 170 °C, insbesondere bevorzugt mindestens 180 °C, besonders bevorzugt mindestens 190 °C und ganz besonders bevorzugt 200 bis 240 °C
und/oder
eine Lichttransmission gemessen nach ASTM D 1003-13 (2013) an einer daraus hergestellten Platte mit 2 mm Dicke von mindestens 80 %, bevorzugt mindestens 85 % und besonders bevorzugt mindestens 90 % aufweist.

Gemäß einer weiteren bevorzugten Ausführungsform ist vorgesehen, dass das mindestens eine amorphe oder mikrokristalline Copolyamid (A) als weiteres Monomer (d) mindestens eine aliphatische Dicarbonsäure mit 6 bis 22 Kohlenstoffatomen enthält.

Gemäß einer weiteren bevorzugten Ausführungsform ist vorgesehen, dass das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexandiamin, Isophorondiamin, 1,3-Bis-(aminomethyl)cyclohexan, 1,4-Bis-(aminomethyl)-cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

Vorteilhaft ist weiter, dass das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethyl-cyclohexyl)-methan und Mischungen daraus; und
(b) mindestens eine dimere Fettsäure mit 36 C-Atomen; und
(c) Isophthalsäure und Terephthalsäure; und gegebenenfalls
(d) mindestens eine aliphatische Dicarbonsäure ausgewählt aus der Gruppe bestehend aus 1,12-Dodecandisäure, 1,14-Tetradecandisäure, 1,18-Octadecandisäure und Mischungen daraus.

Erfindungsgemäß werden insbesondere Copolyamide, ausgewählt aus der Gruppe bestehend aus MACMI/MACM12/MACM36, MACMI/MACM14/MACM36, MACMI/MACM9/MACM36, MACMI/MACMCHD/MACM36, MACMI/MACM11/MACM36, MACMI/MACM13/MACM36, MACMI/MACM18/MACM36, MACMI/MACMT/MACM36, MACMI/MACM36, MACMI/MACMT/MACM12/MACM36, MACMI/MACMT/MACM14/MACM36, MACMI/MACMT/MACM18/MACM36, MACMI/MACMT/MACM9/MACM36, MACMI/MACMT/MACMCHD/MACM36, MACMI/MACMT/MACM12/MACMCHD/MACM36 und Mischungen daraus,
wobei MACM ganz oder teilweise durch TMDC ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann, als das mindestens eine amorphe oder mikrokristalline Copolyamid (A) verwendet.

Noch weiter bevorzugt betrifft die Erfindung die Verwendung eines Copolyamids, ausgewählt aus der Gruppe bestehend aus MACMI/MACM12/MACM36, MACMI/MACM14/MACM36, MACMI/MACM18/MACM36, MACMI/MACMT/MACM36, MACMI/MACM36, MACMI/MACMT/MACM12/MACM36, MACMI/MACMT/MACM14/MACM36, MACMI/MACMT/MACM18/MACM36 und Mischungen daraus,
wobei MACM ganz oder teilweise durch TMDC ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann als das mindestens eine amorphe oder mikrokristalline Copolyamid (A).

Insbesondere betrifft die Erfindung die Verwendung eines Copolyamids, ausgewählt aus der Gruppe bestehend aus MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 und Mischungen daraus.

Das Copolyamid (A) ist transparent.

Bei der erfindungsgemäßen Verwendung kann vorgesehen sein, dass die Copolyamid-Formmasse mindestens ein amorphes oder mikrokristallines Copolyamid (A) enthält, und gegebenenfalls mindestens einen anorganischen Füllstoff (B) und/oder gegebenenfalls mindestens einen Zusatzstoff (C), und/oder gegebenenfalls
mindestens ein weiteres Polymer (D), welches verschieden vom Copolyamid (A) und verschieden vom Zusatzstoff (C) ist.

Vorzugsweise enthält die Copolyamid-Formmasse kein weiteres Polyamid und/oder Copolyamid, bevorzugt keinen weiteren thermoplastischen Kunststoff.

Besonders bevorzugt besteht die Copolyamid-Formmasse aus mindestens einem amorphen oder mikrokristallinen Copolyamid (A) und mindestens einem Zusatzstoff (C).

Ganz besonders bevorzugt betrifft die Verwendung eine Copolyamid-Formmasse, die folgende Zusammensetzung aufweist:
46 bis 100 Gew.-%, bevorzugt 57 bis 99,99 Gew.-% und besonders bevorzugt 63 bis 99,9 Gew.-% amorphes oder mikrokristallines Copolyamid (A), und
0 bis 50 Gew.-%, bevorzugt 0 bis 40 Gew.-% und besonders bevorzugt 0 bis 35 Gew.-% Füllstoff (B), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) bis (C) auf 100 Gew.-% ergänzen.

In einer weiteren ganz besonders bevorzugten Ausführungsform der erfindungsgemässen Verwendung weist die Copolyamid-Formmasse die folgende Zusammensetzung auf:
96 bis 100 Gew.-%, bevorzugt 97 bis 99,99 Gew.-% und besonders bevorzugt 98 bis 99,9 Gew.-% amorphes oder mikrokristallines Copolyamid (A), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) und (C) auf 100 Gew.-% ergänzen.

Nachfolgend werden die Komponenten (B) und (C) näher beschrieben.

### Komponente (B)

Der Begriff Füllstoffe (Komponente(B)) umfasst faser- oder nadelförmige Füllstoffe, teilchenförmige Füllstoffe und Mischungen davon.

Die Füllstoffe können vorzugsweise beschichtet oder oberflächenbehandelt sein, d.h. sie können mit einem geeigneten Schlichte- oder Haftvermittlersystem ausgerüstet oder anderweitig oberflächenaktiviert sein. Dazu können zum Beispiel Systeme auf Basis von Urethanen, Silanen, Epoxiden, Polyamiden, Polyhydroxyether, Acrylaten respektive Kombinationen oder Mischungen davon verwendet werden. Die Schlichte- oder Haftvermittlersysteme können auch noch andere Hilfsmittel wie zum Beispiel Antistatika oder Gleitmittel enthalten.

Die faser- oder nadelförmigen Füllstoffe sind vorzugsweise ausgewählt aus der Gruppe bestehend aus Glasfasern, Kohlenstofffasern, Basaltfasern, Borfasern, Schlackenfasern, Metallfasern, Whiskers, Mineralfasern, Wollastonit, Aramidfasern, gemahlenen Glasfasern, gemahlenen Kohlenstofffasern, gemahlenen Mineralfasern und Mischungen hiervon. Besonders bevorzugt werden die faser- oder nadelförmigen Füllstoffe aus der Gruppe bestehend aus Glasfasern, Kohlenstofffasern, Basaltfasern, Borfasern, Aramidfasern und Mischungen hiervon ausgewählt. Ganz besonders bevorzugt werden als faser- oder nadelförmige Füllstoffe ausschließlich Glasfasern eingesetzt.

Bei den Glas- oder Kohlenstoffasern können Schnittfasern oder Endlosfasern (Roving) verwendet werden.

Die Glas- oder Kohlenstofffasern weisen einen Querschnitt auf, der kreisförmig (rund), oval, elliptisch, mit Einschnürung(en) elliptisch (sogenannte Kokon- oder cocoon-Fasern), eckig oder rechteckig ist. Fasern mit nichtkreisförmigen Querschnitt, insbesondere ovale, elliptische, mit Einschnürung(en) elliptisch (sogenannte Kokon- oder cocoon-Fasern), eckige oder rechteckige Fasern werden auch als flache Fasern bezeichnet. Es können auch Mischungen von kreisförmigen und nichtkreisförmigen Fasern eingesetzt werden.

Das Erscheinungsbild der Glasfasern kann gestreckt oder spiralförmig sein.

Es können Glasfasern aus allen Glassorten, wie z.B. A-, C-, D-, E-, E-CR-, L-, LD-, M-, NE-, S-, R-, AR-Glas, oder beliebigen Mischungen davon eingesetzt werden. Bevorzugt sind Glasfasern aus E-Glas, S-Glas oder Mischungen mit E- und/oder S-Glasfasern.

Die Schnittglasfasern besitzen eine faserlänge von 1 bis 50 mm, vorzugsweise von 1 bis 25 mm, bevorzugt 1.5 bis 20 mm, besonders bevorzugt 2 bis 12 mm und ganz besonders bevorzugt von 2 bis 8 mm.

Die Glasfasern weisen vorzugsweise einen Durchmesser von 5 bis 20 µm, bevorzugt von 5 bis 15 µm und besonders bevorzugt von 6 bis 12 µm auf.

Werden die Glasfasern als Endlosfasern (Roving) beim Pultrusionsverfahren eingesetzt, weisen sie vorzugsweise einen Durchmesser von maximal 20 µm, bevorzugt von maximal 18 µm, besonders bevorzugt von 10 bis 17 µm auf.

Die Kohlenstofffasern weisen vorzugsweise einen Durchmesser von 3 bis 12 µm, bevorzugt 4 bis 10 µm, besonders bevorzugt 4 bis 9 µm auf.

Bei flachen Fasern beträgt das Aspektverhältnis, d.h. das Verhältnis der Hauptquerschnittsachse zur Nebenquerschnittsachse 1,5 bis 8, bevorzugt 2 bis 6, besonders bevorzugt 2,5 bis 5, ganz besonders bevorzugt 3 bis 4. Unter den flachen Fasern sind flache Glasfasern besonders bevorzugt. Die Querschnittsachsen der flachen Glasfasern sind 3 bis 40 µm lang. Bevorzugt beträgt die Länge der Nebenquerschnittsachse 3 bis 20 µm, besonders bevorzugt 4 bis 10 µm und die Länge der Hauptquerschnittsachse 6 bis 40 µm, besonders bevorzugt 12 bis 30 µm.

Die teilchenförmigen Füllstoffe sind vorzugsweise ausgewählt aus der Gruppe bestehend aus Dolomit, Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, permanentmagnetischen oder magnetisierbaren Metallen oder Legierungen, Glasflakes, Glaskugeln, Hohlglaskugeln, hohlkugeligen Silikatfüllstoffen und Mischungen hiervon. Besonders bevorzugt werden die teilchenförmigen Füllstoffe aus der Gruppe bestehend aus Silikaten, Quarz, Talkum, Glimmer, Kaolin, Perlit, Kieselerde, gefällte oder pyrogene Kieselsäuren, Kieselgur, Titandioxid, Magnesiumcarbonat, Magnesiumhydroxid, Aluminiumhydroxyd, gemahlenem oder gefälltem Calciumcarbonat, Kreide, Kalk, Kalksteinmehl, Schiefermehl, Feldspat, Bariumcarbonat, Bariumsulfat, synthetischen Schichtsilikaten, natürlichen Schichtsilikaten, Glasflakes, Glaskugeln, Hohlglaskugeln, hohlkugeligen Silikatfüllstoffen und Mischungen hiervon ausgewählt. Ganz besonders bevorzugt werden die teilchenförmigen Füllstoffe aus der Gruppe bestehend aus Silikaten, Talkum, Glimmer, Kaolin, Titandioxid, gemahlenem oder gefälltem Calciumcarbonat, Kreide, Kalksteinmehl, Schiefermehl, synthetischen Schichtsilikaten, natürlichen Schichtsilikaten, Glasflakes, Glaskugeln, Hohlglaskugeln und Mischungen hiervon ausgewählt.

Bevorzugt wird in der erfindungsgemäßen Polyamid-Formmasse als Füllstoff (Komponente (B)) mindestens ein faser- oder nadelförmigen Füllstoff oder eine Mischung mindestens eines faser- oder nadelförmigen Füllstoffs mit mindestens einem teilchenförmigen Füllstoff eingesetzt.

Wird eine Mischung aus mindestens einem faser- oder nadelförmigen Füllstoff mit mindestens einem teilchenförmigen Füllstoff verwendet, macht der Anteil des teilchenförmigen Füllstoffs maximal die Hälfte, bevorzugt maximal ein Drittel, besonders bevorzugt maximal ein Viertel der gesamten Menge des Füllstoffs aus.

Besonders bevorzugt werden in der erfindungsgemäßen Polyamid-Formmasse als Füllstoff ausschließlich faser- oder nadelförmige Füllstoffe eingesetzt.

### Komponente (C)

Gemäß einer bevorzugten Ausführungsform der vorliegenden Erfindung ist der mindestens eine Zusatzstoff (Komponente (C)) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Antiblockmitteln, kettenverlängernden Additiven, kettenverkürzenden Additiven, optischen Aufhellern, IR-Absorbern, NIR-Absorbern und Mischungen davon.

Bei den organischen Stabilisatoren sind Phenol-, Phosphit-, Phosphonit-Verbindungen, Stabilisatoren auf Basis eines gehinderten Amins (HALS) oder deren Mischungen besonders bevorzugt.

Der mindestens eine Zusatzstoff kann auch in Masterbatchform zugegeben werden. Bevorzugt wird als Basispolymer des Masterbatches ein Polyamid verwendet. Dieses Polyamid ist vorzugsweise ausgewählt aus der Gruppe bestehend aus den PA 12, PA 1010, PA 1012, PA 1212, PA 6/12, PA 612, PA MACM12 und deren Mischungen oder besteht aus dem Copolyamid (A) selbst.

Ganz besonders bevorzugt handelt es sich bei dem Basispolymeren des Masterbatches um das Copolyamid (A) selbst.

Die vorliegende Erfindung wird anhand der nachfolgenden Ausführungen und Versuche näher erläutert, ohne die Erfindung allerdings auf die dargestellten speziellen Ausführungsformen zu beschränken.

### Messmethoden

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg) und Schmelztemperatur

Die Bestimmung erfolgte nach ISO 11357-2 und -3 (2013) an Granulat mit einem Wassergehalt von unter 0,1 Gew.-%.
Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Der Schmelzpunkt wurde bei der zweiten Aufheizung bestimmt.

Als Schmelztemperatur wird die Temperatur am Peakmaximum angegeben. Der Mittelpunkt des Glasübergangsbereichs, welcher als Glasübergangstemperatur (Tg) angegeben wird, wurde nach der Methode "Half height" ermittelt.

### Gewichtsänderung

Die Bestimmung der Gewichtsänderung erfolgte an gelagerten ISO-Zugstäben. Von der Gewichtsänderung der in der wässrigen Hypochlorit-Lösung gelagerten Zugstäben wurde die Gewichtsänderung von nur in Wasser gelagerten Zugstäben subtrahiert. Dadurch wurde die bei der Lagerung in wässriger Hypochlorit-Lösung ebenfalls auftretende Gewichtszunahme durch Wasseraufnahme eliminiert.

### Reißkraft

Die Bestimmung der Reißkraft erfolgte an in wässriger Hypochlorit-Lösung gelagerten ISO-Zugstäben (Typ A1, Masse 170 x 20/10 x 4) hergestellt gemäß der Norm: ISO/CD 3167 (2003).

Die Messung wurde analog zur Messung der Reißfestigkeit gemäß ISO 527 (2012) bei 23°C mit einer Zuggeschwindigkeit von 50 mm/min bei unverstärkten und 5 mm/min bei verstärkten Materialien durchgeführt. Die absolute Kraft wurde als Messwert direkt verwendet, d.h. ohne Division durch die Querschnittsfläche des Prüfkörpers.

### Lichttransmission

Die Lichttransmission wurde bei 23 °C gemäß der ASTM D 1003-13 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

### Clarity (Bildschärfe)

Die Clarity wurde bei 23 °C gemäß der ASTM D 1003 (2013) an den Enden der in wässriger Hypochlorit-Lösung gelagerten und bereits bei der Bestimmung der Reißkraft verwendeten ISO-Zugstäbe auf einem "Haze Gard plus" der Firma Byk Gardner mit CIE Lichtart C ermittelt. Sie wird in einem Winkelbereich kleiner 2,5° vom einfallenden Lichtstrahl gemessen und in % der eingestrahlten Lichtmenge angegeben.

### Lagerungsbedingungen

Die Probenentnahme fand bei beiden Lagerungen zu den gleichen Zeitpunkten statt, und zwar jeweils nach 1344 h, 4032 h, 5376 h, 6720 h und 8064 h. Pro Material und Lagerungszeit wurden jeweils 5 ISO-Zugstäbe (Typ A1, Masse 170 x 20/10 x 4, hergestellt gemäß der Norm: ISO/CD 3167 (2003)) gelagert und das arithmetische Mittel der 5 Messwerte gebildet.

Die Wasser-Lagerung erfolgte bei thermostatgeregelten 60 °C in deionisiertem Wasser.

Die Hypochlorit-Lagerung erfolgte bei thermostatgeregelten 60 °C in einer wässrigen Natrium-Hypochlorit-Lösung mit einer Konzentration von 10 mg/l in einem Test-Stand der Fa. HyperDES-watertechnology GmbH, Crailsheim, Deutschland mit einem Volumen von 100 l. Die Natrium-Hypochlorit-Lösung wird darin mit 6 bis 8 l/min umgewälzt, wobei die Lösung auf einen pH-Wert von 6,8 und einer Leitfähigkeit von 600 bis 1200 µS eingestellt wird. Die Natrium-Hypochlorit-Konzentration, der pH-Wert und die Leitfähigkeit werden während der gesamten Lagerungsdauer automatisch durch Zugabe von 0,5 Gew.-%iger Natrium-Hypochlorit-Lösung, 0,7 Gew.-%iger NatriumhydroxydLösung, 0,7 Gew.-%iger Schwefelsäure bzw. deionisiertem Wasser geregelt. Der pH-Wert und die Natrium-Hypochlorit-Konzentration werden zusätzlich einmal pro Woche mit dem CHEMATEST 20s (erhältlich von der Fa. Swan Analytische Instrumente AG, Hinwil, Schweiz) mittels kolorimetrischem Verfahren mit N,N-Diethyl-1,4-Phenylendiamin nach DIN EN ISO 7393-2 (2012) überprüft.

### Herstellung der Prüfkörper

Zur Herstellung der Prüfkörper wurde Granulat mit einem Wassergehalt von weniger als 0,1 Gew.-% verwendet.

Die ISO-Zugstäbe wurden auf einer Spritzgussmaschine der Firma Arburg, Modell Allrounder 420 C 1000-250 hergestellt. Dabei wurden vom Einzug zur Düse auf- und absteigende Zylindertemperaturen verwendet.

Ungefüllte Copolyamid-Formmassen
(Co)Polyamid (A) und (PA2)

| | |
|---|---|
| Zylindertemperaturen: | 280/285/290/295/300/290 °C |
| Werkzeugtemperatur: | 90 °C |

Polyamid (PA3) und (PA4)

| | |
|---|---|
| Zylindertemperaturen: | 265/270/275/280/285/280 °C |
| Werkzeugtemperatur: | 80 °C |

Gefüllte Copolyamid-Formmassen
Copolyamid (A) mit Glasfasern

| | |
|---|---|
| Zylindertemperaturen: | 290/295/300/305/310/300 °C |
| Werkzeugtemperatur: | 80 °C |

Polyamid (PA5) mit Glasfasern

| | |
|---|---|
| Zylindertemperaturen: | 320/325/330/335/340/330 °C |
| Werkzeugtemperatur: | 160 °C |

Polyamid (PA6) mit Glasfasern

| | |
|---|---|
| Zylindertemperaturen: | 310/315/320/325/330/325 °C |
| Werkzeugtemperatur: | 120 °C |

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

**Tabelle 1: In den Beispielen und Vergleichsbeispielen verwendete Materialien**

| **Komponenten** | **Beschreibung** | **Hersteller** |
|---|---|---|
| Copolyamid (A) MACMI/MACMT/MACM12/MACM36 | Amorphes Polyamid aus Bis(4-amino-3-methylcyclohexyl)methan (50 Mol-%), Isophthalsäure (14 Mol-%), Terephthalsäure (14 Mol-%), 1,12-Dodecandisäure (20 Mol-%) und dimerer Fettsäure mit 36 C-Atomen (2 Mol-%) | EMS-CHEMIE AG, Schweiz |
| | RV 1,62 (gemessen mit 0,5 g in 100 ml m-Kresol bei 20 °C) | |
| | Glasübergangstemperatur 206 °C | |
| | Lichttransmission bei 2 mm Dicke 93 % | |
| Polyamid (PA2) 6T/6I/MACMT/MACMI/PACMT/PACMI/12 | Amorphes Polyamid aus 1,6-Hexandiamin (39,0 Mol-%), Bis(3-methyl-4-amino-cyclohexyl)methan (7,1 Mol-%), Bis(4-amino-cyclohexyl)methan (2,5 Mol-%), Isophthalsäure (24,3 Mol-%), Terephthalsäure (24,3 Mol-%) und Laurinlactam (2,8 Mol-%) | EMS-CHEMIE AG, Schweiz |
| | RV 1,60 (gemessen mit 0,5 g in 100 ml m-Kresol bei 20 °C) | |
| | Glasübergangstemperatur 159 °C | |
| | Lichttransmission bei 2 mm Dicke 92 % | |
| Polyamid (PA3) MACM12/PACM12 | Amorphes Polyamid aus Bis(3-methyl-4-amino-cyclohexyl)-methan (67 Mol-%), Bis(4-amino-cyclohexyl)methan (33 Mol-%) und 1,12-Dodecandisäure (50 Mol-%) | EMS-CHEMIE AG, Schweiz |
| | RV 1,84 (gemessen mit 0,5 g in 100 ml m-Kresol bei 20 °C) | |
| | Glasübergangstemperatur 145 °C | |
| | Lichttransmission bei 2 mm Dicke 93 % | |
| Polyamid (PA4) MACM12 | Amorphes Polyamid aus Bis(3-methyl-4-aminocyclohexyl)methan und 1,12-Dodecandisäure | EMS-CHEMIE AG, Schweiz |
| | RV 1,72 (gemessen mit 0,5 g in 100 ml m-Kresol bei 20 °C) | |
| | Glasübergangstemperatur 155 °C | |
| | Lichttransmission bei 2 mm Dicke 94 % | |
| Polyamid (PA5) 6T/6I | Teilkristallines Polyamid aus 1,6-Hexandiamin (50 Mol-%), Terephthalsäure (35 Mol-%) und Isophthalsäure (15 Mol-%) | EMS-CHEMIE AG, Schweiz |
| | RV 1,62 (gemessen mit 0,5 g in 100 ml m-Kresol bei 20 °C) | |
| | Glasübergangstemperatur 135 °C | |
| | Schmelztemperatur 325 °C | |
| Polyamid (PA6) 10T/6T | Teilkristallines Polyamid aus 1,10-Decandiamin (41 Mol-%), 1,6-Hexandiamin (9 Mol-%) und Terephthalsäure (50 Mol-%) | EMS-CHEMIE AG, Schweiz |
| | RV 1,63 (gemessen mit 0,5 g in 100 ml m-Kresol bei 20 °C) | |
| | Glasübergangstemperatur 115 °C | |
| | Schmelztemperatur 295 °C | |
| Glasfaser | runde Glasfaser, 3 mm lang | Chongqing Polycomp International Corp., China |
| | Durchmesser 10 µm | |
| | Handelsname: CPIC ECT 301HP | |
| Stabilisator | Pentaerythritoltetrakis-[3-(3,5-di-tert-butyl-4-hydroxyphenyl)-propionate, Antioxidans auf Basis eines sterisch gehinderten Phenols | BASF SE, Deutschland |
| | CAS: 6683-19-8 | |
| | Handelsname: Irganox 1010 | |
| RV relative Viskosität, gemessen an einer Lösung aus 0,5 g Polyamid in 100 ml m-Kresol bei 20 °C | | |

**Tabelle 2: Versuchsergebnisse - Gewichtsänderung in %**

| | **Einheit** | **Beispiel** | **Vergleichsbeispiele** | | | **Beispiel** | **Vergleichsbeispiele** | |
|---|---|---|---|---|---|---|---|---|
| | | **1** | **2** | **3** | **4** | **5** | **6** | **7** |
| **(Co)Polyamid** | Gew.-% | (A) 100 | (PA2) 100 | (PA3) 100 | (PA4) 100 | (A) 49,75 | (PA5) 49,75 | (PA6) 49,75 |
| **Glasfaser** | Gew.-% | - | - | - | - | 50 | 50 | 50 |
| **Stabilisator** | Gew.-% | - | - | - | - | 0,25 | 0,25 | 0,25 |

| **Lagerungsdauer [h]** | | | | | | | | |
|---|---|---|---|---|---|---|---|---|
| 0 | % | 0 | 0 | 0 | 0 | 0 | 0 | 0 |
| 1344 | % | 0,27 | 0,38 | 4,27 | -0,5 | 0,05 | -0,78 | -1,97 |
| 2688 | % | 0,36 | -0,5 | 8,83 | 0,67 | 0,03 | -2,54 | -5,41 |
| 4032 | % | 0,29 | -1,89 | 1,84 | 3,29 | 0,02 | -4,17 | -7,84 |
| 5376 | % | 0,35 | -2,22 | 11,51 | n.g. | -0,11 | n.g. | -11,15 |
| 6720 | % | 0,17 | -2,24 | 14,86 | 5,27 | -0,3 | -12,37 | -13,43 |
| 8064 | % | 0,12 | -3,39 | 15,81 | 9,02 | -0,53 | -14,69 | -15,89 |

**Tabelle 3: Versuchsergebnisse - Reißkraft in N und in % des Ausgangswertes**

| | **Einheit** | **Beispiel** | | **Vergleichsbeispiele** | | | |
|---|---|---|---|---|---|---|---|
| | | **5** | | **6** | | **7** | |
| **(Co)Polyamid** | Gew.-% | (A) | | (PA5) | | (PA6) | |
| | | 49,75 | | 49,75 | | 49,75 | |
| **Glasfaser** | Gew.-% | 50 | | 50 | | 50 | |
| **Stabilisator** | Gew.-% | 0,25 | | 0,25 | | 0,25 | |

| **Lagerungsdauer [h]** | | | | | | | |
|---|---|---|---|---|---|---|---|
| | - | N | % | N | % | N | % |
| 0 | - | 6696 | 100 | 10511 | 100 | 8352 | 100 |
| 1344 | - | 5457 | 82 | 8490 | 81 | 6573 | 79 |
| 2688 | - | 5679 | 85 | 7948 | 77 | 6096 | 73 |
| 4032 | - | 5669 | 85 | 7482 | 71 | 5831 | 70 |
| 5376 | - | 5408 | 81 | n.g. | n.g. | 5598 | 67 |
| 6720 | - | 5725 | 85 | 6828 | 65 | 5330 | 64 |
| 8064 | - | 5584 | 83 | 6484 | 62 | 4904 | 59 |

| | | | | | | | |
|---|---|---|---|---|---|---|---|
| n.g.: nicht gemessen | | | | | | | |

**Tabelle 4: Versuchsergebnisse - Clarity**

| | **Einheit** | **Beispiel** | **Vergleichsbeispiele** | | |
|---|---|---|---|---|---|
| | | **1** | **2** | **3** | **4** |
| **(Co)Polyamid** | Gew.-% | (A) 100 | (PA2) 100 | (PA3) 100 | (PA4) 100 |
| **Lagerungsdauer [h]** | | | | | |
| 0 | % | 85 | 96 | 77 | 85 |
| 1344 | % | 80 | 12 | 12 | 86 |
| 2688 | % | 77 | 12 | 8 | 12 |
| 4032 | % | 60 | 12 | 9 | n.g. |
| 6720 | % | 70 | 12 | 12 | 12 |

| | | | | | |
|---|---|---|---|---|---|
| n.g.: nicht gemessen | | | | | |

Wie aus den Versuchen hervorgeht, zeigt sich überraschenderweise, dass lediglich ein bestimmtes Copolyamid (das Copolyamid A) Stabilität gegenüber Hypochloritlauge aufweist.

So konnte überaschenderweise gefunden werden, dass bei Lagerung eines Formkörpers in Hypochlorit enthaltender wässriger Lösung eine Gewichtskonstanz ausschließlich beim Copolyamid A zu verzeichnen ist. Die bei den übrigen Polyamiden der Vergleichsversuche beobachtete Gewichtszunahme oder der Gewichtsabbau konnte nicht verzeichnet werden. Es wird davon ausgegangen, dass eine Gewichtszunahme auf eine Oxidation des Copolyamids mit Ausbildung einer Hydrogelschicht an der Oberfläche und eine anschließende Wassereinlagerung hindeutet. Eine Gewichtsabnahme lässt einen oxidativen Abbau des Copolyamids vermuten. In beiden Fällen tritt somit eine Schädigung des Copolyamids ein.

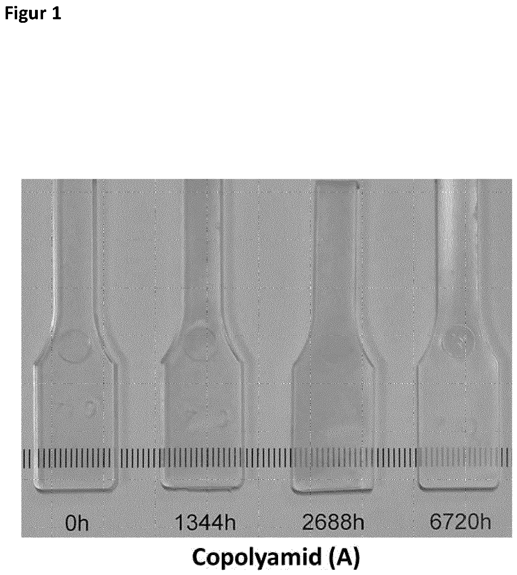

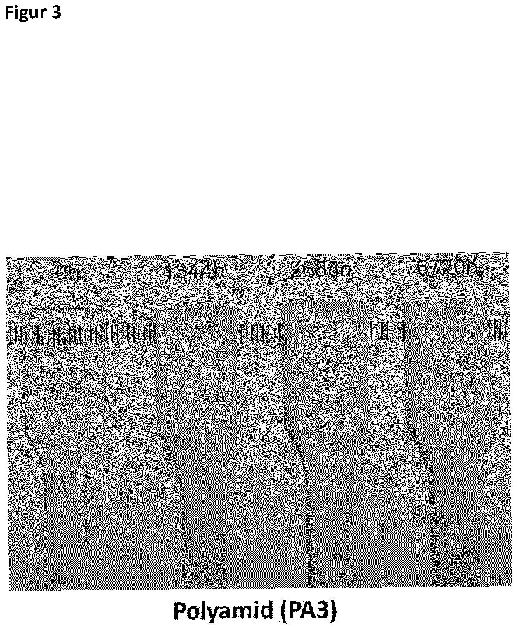

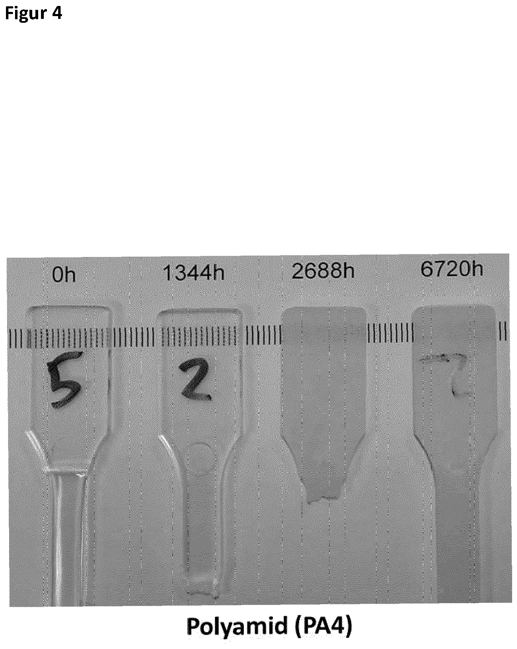

Besonders gut zeigt sich die Eignung der erfindungsgemäßen (ungefüllten) Copolyamide (A) bei Betrachtung der Clarity, also der Bildschärfe, die nach längerem Kontakt mit Hypochlorit haltiger Lösung eintritt. Bei Verwendung der erfindungsgemäßen Copolyamide (A) zeigt sich, dass diese auch bei längerem Kontakt mit Hypochlorit haltiger Lösung ein klares Erscheinungsbild zeigen und nicht opak werden, wie dies bei Vergleichsbeispielen der Fall ist. Dies zeigt sich eindrucksvoll am in Figur 1 aus einer erfindungsgemäß verwendeten Formmasse hergestellten Formkörper, der auch nach 6720 Stunden Lagerung in Hypochlorit enthaltender Lösung noch durchsichtig ist (siehe Fig. 1), während sämtliche Formkörper der Vergleichsbeispiele bereits nach 1344 bzw 2688 Stunden opak und intransparent werden (siehe Fig. 2-4).

Sobald die Copolyamid-Formmassen gefüllt sind - beispielsweise mit Glasfasern - sind die Formmassen grundsätzlich opak. Hier treten aufgrund der anwesenden Füllstoffe zusätzlich zur mangelnden Gewichtsstabilität andere Probleme auf. Glasfasern werden derartigen Systemen zur Verbesserung der mechanischen Eigenschaften, insbesondere zur Verbesserung der Reißkraft zugegeben. Allerdings zeigen derartige Copolyamid-Formmassen eine deutliche Verschlechterung der Beständigkeit der Reißkraft bei Kontakt mit hypochlorit-haltigen Lösungen (siehe Tabelle 3, Vergleichsbeispiele 6 und 7). Überraschenderweise kann diese Problematik dadurch gelöst werden, dass das Copolyamid A einer derartigen Formmasse zugrunde gelegt wird. Es wird ein deutlich besserer Erhalt der Reißkraft festgestellt (Beispiel 5, Tabelle 3).

## Patentansprüche

1. Verwendung einer Copolyamid-Formmasse, umfassend mindestens ein amorphes oder mikrokristallines Copolyamid (A), welches die folgenden Monomere enthält:
(a) mindestens ein cycloaliphatisches Diamin;
(b) 0,25 bis 10 Mol-% mindestens einer dimeren Fettsäure; und
(c) 12 bis 49,75 Mol-% mindestens einer aromatischen Dicarbonsäure ausgewählt aus der Gruppe bestehend aus Isophthalsäure, Terephthalsäure und Naphthalindicarbonsäure, und
(d) 0 bis 37,75 Mol-% mindestens einer aliphatischen Dicarbonsäure;
wobei der molare Anteil an Isophthalsäure mindestens gleich dem molaren Anteil an Terephthalsäure ist, und
wobei sich die Monomere (b), (c) und gegebenenfalls (d) zu 50 Mol-% addieren und sich die molaren Anteile aller im Copolyamid (A) enthaltenen Monomere auf 100 Mol-% ergänzen,
zur Herstellung von gegenüber wässrigen, Hypochlorige Säure und/oder deren Salzen enthaltenden Lösungen beständigen Formkörpern.

2. Verwendung nach Anspruch 1, zur Herstellung eines Formkörpers, ausgewählt aus der Gruppe bestehend aus Bauteilen zur Förderung und/oder Aufbewahrung von Trinkwasser oder Warmwasser, Bauteilen in Schwimmbädern, Whirlpools, Heizungsanlagen oder im Sanitärbereich (Küche, Bad, Sauna, Toilette), Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (Schaufelräder, Impeller), Sichtscheiben, Abdeckungen, Leitungen oder Behälter sowie Bestandteile oder Elemente davon.

3. Verwendung nach einem der vorhergehenden Ansprüche, **dadurch gekennzeichnet, dass** das mindestens eine amorphe oder mikrokristalline Copolyamid (A) die folgenden Monomere mit den folgenden Mol-Anteilen enthält:
40 bis 50 Mol-%, bevorzugt 48 bis 50 Mol-% und insbesondere bevorzugt 50 Mol-% cycloaliphatisches Diamin (a); und
1 bis 7,5 Mol-%, bevorzugt 1,5 bis 4,4 Mol-%, insbesondere bevorzugt 1,7 bis 3,0 Mol-% dimere Fettsäure (b); und
14 bis 44 Mol-%, bevorzugt 23 bis 38,5 Mol-%, besonders bevorzugt 25,5 bis 33,3 Mol-% aromatische Dicarbonsäure (c); und gegebenenfalls
5 bis 35 Mol-%, bevorzugt 10 bis 25,5 Mol-% und besonders bevorzugt 15 bis 22,8 Mol-% aliphatische Dicarbonsäure (d);
wobei sich die Anteile aller im Copolyamid (A) enthaltenen Monomere auf 100 Mol-% ergänzen.

4. Verwendung nach einem der vorhergehenden Ansprüche, **dadurch gekennzeichnet, dass** das mindestens eine amorphe oder mikrokristalline Copolyamid (A) als aromatische Dicarbonsäure (c) Isophthalsäure und bevorzugt auch Terephthalsäure enthält, wobei
der Anteil an Isophthalsäure bezogen auf die Summe aller Monomere im Copolyamid (A) 6 bis 49,75 Mol-%, bevorzugt 7 bis 44 Mol-%, besonders bevorzugt 11,5 bis 27 Mol-% und insbesondere bevorzugt 12,75 bis 20,55 beträgt und/oder
der Anteil an Terephthalsäure bezogen auf die Summe aller Monomere im Copolyamid (A) 0 bis 24,875 Mol-%, bevorzugt 0 bis 22 Mol-%, besonders bevorzugt 11,5 bis 19,25 Mol-% und insbesondere bevorzugt 12,75 bis 16,65 Mol-% beträgt.

5. Verwendung nach einem der vorhergehenden Ansprüche, **dadurch gekennzeichnet, dass** das mindestens eine amorphe oder mikrokristalline Copolyamid (A)
eine Glasübergangstemperatur gemessen nach ISO 11537-2 (2013) von mindestens 155° C, bevorzugt mindestens 170 °C, insbesondere bevorzugt mindestens 180 °C, besonders bevorzugt mindestens 190 °C und ganz besonders bevorzugt 200 bis 240 °C und/oder
eine Lichttransmission gemessen nach ASTM D 1003-13 (2013) an einer daraus hergestellten Platte mit 2 mm Dicke von mindestens 80 %, bevorzugt mindestens 85 % und besonders bevorzugt mindestens 90 % aufweist.

6. Verwendung nach einem der vorhergehenden Ansprüche, **dadurch gekennzeichnet, dass** das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethylcyclohexyl)-methan, Bis-(4-amino-3,5-dimethyl-cyclohexyl)-methan, 2,6-Norbornandiamin oder 2,6-Bis-(aminomethyl)-norbornan, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

7. Verwendung nach einem der vorhergehenden Ansprüche, **dadurch gekennzeichnet, dass** das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan, Bis-(4-amino-3,5-dimethyl-cyclohexyl)-methan und Mischungen daraus; und
(b) mindestens eine dimere Fettsäure mit 36 C-Atomen; und
(c) Isophthalsäure und Terephthalsäure; und gegebenenfalls
(d) mindestens eine aliphatische Dicarbonsäure ausgewählt aus der Gruppe bestehend aus 1,12-Dodecandisäure, 1,14-Tetradecandisäure, 1,18-Octadecandisäure und Mischungen daraus.

8. Verwendung nach einem der vorhergehenden Ansprüche, **dadurch gekennzeichnet, dass** das mindestens eine amorphe oder mikrokristalline Copolyamid (A) als weiteres Monomer (d) mindestens eine aliphatische Dicarbonsäure mit 6 bis 22 Kohlenstoffatomen enthält.

9. Verwendung nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACM9/MACM36, MACMI/MACMCHD/MACM36, MACMI/MACM11/MACM36, MACMI/MACM13/MACM36, MACMI/MACM18/MACM36, MACMI/MACMT/MACM36, MACMI/MACM36, MACMI/MACMT/MACM12/MACM36, MACMI/MACMT/MACM14/MACM36, MACMI/MACMT/MACM18/MACM36, MACMI/MACMT/MACM9/MACM36, MACMI/MACMT/MACMCHD/MACM36, MACMI/MACMT/MACM12/MACMCHD/MACM36 und Mischungen daraus,
wobei MACM ganz oder teilweise durch TMACM ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann.

10. Verwendung nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACM18/MACM36, MACMI/MACMT/MACM36, MACMI/MACM36, MACMI/MACMT/MACM12/MACM36, MACMI/MACMT/MACM14/MACM36, MACMI/MACMT/MACM18/MACM36 und Mischungen daraus,
wobei MACM ganz oder teilweise durch TMACM ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann.

11. Verwendung nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 und Mischungen daraus.

12. Verwendung nach einem der vorhergehenden Ansprüche, **dadurch gekennzeichnet, dass** die Copolyamid-Formmasse mindestens ein amorphes oder mikrokristallines Copolyamid (A) enthält, und gegebenenfalls mindestens einen anorganischen Füllstoff (B) und/oder gegebenenfalls mindestens einen Zusatzstoff (C), und/oder gegebenenfalls mindestens ein weiteres Polymer (D), welches verschieden vom Copolyamid (A) und verschieden vom Zusatzstoff (C) ist.

13. Verwendung nach einem der vorhergehenden Ansprüche, **dadurch gekennzeichnet, dass** die Copolyamid-Formmasse die folgende Zusammensetzung aufweist:
46 bis 100 Gew.-%, bevorzugt 57 bis 99,99 Gew.-% und besonders bevorzugt 63 bis 99,9 Gew.-% amorphes oder mikrokristallines Copolyamid (A), und
0 bis 50 Gew.-%, bevorzugt 0 bis 40 Gew.-% und besonders bevorzugt 0 bis 35 Gew.-% Füllstoff (B), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) bis (C) auf 100 Gew.-% ergänzen.

14. Verwendung nach einem der vorhergehenden Ansprüche, **dadurch gekennzeichnet, dass** die Copolyamid-Formmasse kein weiteres Polyamid und/oder Copolyamid, bevorzugt keinen weiteren thermoplastischen Kunststoff enthält.

15. Verwendung nach einem der vorhergehenden Ansprüche, **dadurch gekennzeichnet, dass** die Copolyamid-Formmasse die folgende Zusammensetzung aufweist:
96 bis 100 Gew.-%, bevorzugt 97 bis 99,99 Gew.-% und besonders bevorzugt 98 bis 99,9 Gew.-% amorphes oder mikrokristallines Copolyamid (A), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) und (C) auf 100 Gew.-% ergänzen.

## Geänderte Patentansprüche

### Geänderte Patentansprüche gemäss Regel 137(2) EPÜ.

1. Formkörper, ausgewählt aus der Gruppe bestehend aus Bauteilen zur Förderung und/oder Aufbewahrung von Trinkwasser oder Warmwasser, Bauteilen in Schwimmbädern, Whirlpools, Heizungsanlagen oder im Sanitärbereich (Küche, Bad, Sauna, Toilette), Armaturen, Fittings, Gehäusen, Mischern, Hähnen, Filtergehäusen, Wasserzählern, Wasserzählerkomponenten (Lager, Propeller, Pilone), Ventilen, Ventilkomponenten (Gehäuse, Absperrkugel, Schieber, Zylinder), Verteilern, Kartuschen, Pumpen, Pumpenkomponenten (Schaufelräder, Impeller), Sichtscheiben, Abdeckungen, Leitungen oder Behälter sowie Bestandteile oder Elemente davon, bestehend aus einer Copolyamid-Formmasse, umfassend mindestens ein amorphes oder mikrokristallines Copolyamid (A), welches die folgenden Monomere enthält:
(a) mindestens ein cycloaliphatisches Diamin;
(b) 0,25 bis 10 Mol-% mindestens einer dimeren Fettsäure; und
(c) 12 bis 49,75 Mol-% mindestens einer aromatischen Dicarbonsäure ausgewählt aus der Gruppe bestehend aus Isophthalsäure, Terephthalsäure und Naphthalindicarbonsäure, und
(d) 0 bis 37,75 Mol-% mindestens einer aliphatischen Dicarbonsäure; wobei -für den Fall, dass sowohl Isophthalsäure und Terephthalsäure als Monomere enthalten sind - der molare Anteil an Isophthalsäure mindestens gleich dem molaren Anteil an Terephthalsäure ist, und wobei sich die Monomere (b), (c) und gegebenenfalls (d) zu 50 Mol-% addieren und sich die molaren Anteile aller im Copolyamid (A) enthaltenen Monomere auf 100 Mol-% ergänzen.

2. Formkörper nach Anspruch 1, **dadurch gekennzeichnet, dass** das mindestens eine amorphe oder mikrokristalline Copolyamid (A) die folgenden Monomere mit den folgenden Mol-Anteilen enthält:
40 bis 50 Mol-%, bevorzugt 48 bis 50 Mol-% und insbesondere bevorzugt 50 Mol-% cycloaliphatisches Diamin (a); und
1 bis 7,5 Mol-%, bevorzugt 1,5 bis 4,4 Mol-%, insbesondere bevorzugt 1,7 bis 3,0 Mol-% dimere Fettsäure (b); und
14 bis 44 Mol-%, bevorzugt 23 bis 38,5 Mol-%, besonders bevorzugt 25,5 bis 33,3 Mol-% aromatische Dicarbonsäure (c); und gegebenenfalls
5 bis 35 Mol-%, bevorzugt 10 bis 25,5 Mol-% und besonders bevorzugt 15 bis 22,8 Mol-% aliphatische Dicarbonsäure (d);
wobei sich die Anteile aller im Copolyamid (A) enthaltenen Monomere auf 100 Mol-% ergänzen.

3. Formkörper nach einem der vorhergehenden Ansprüche, **dadurch gekennzeichnet, dass** das mindestens eine amorphe oder mikrokristalline Copolyamid (A) als aromatische Dicarbonsäure (c) Isophthalsäure und bevorzugt auch Terephthalsäure enthält, wobei
der Anteil an Isophthalsäure bezogen auf die Summe aller Monomere im Copolyamid (A) 6 bis 49,75 Mol-%, bevorzugt 7 bis 44 Mol-%, besonders bevorzugt 11,5 bis 27 Mol-% und insbesondere bevorzugt 12,75 bis 20,55 beträgt und/oder
der Anteil an Terephthalsäure bezogen auf die Summe aller Monomere im Copolyamid (A) 0 bis 24,875 Mol-%, bevorzugt 0 bis 22 Mol-%, besonders bevorzugt 11,5 bis 19,25 Mol-% und insbesondere bevorzugt 12,75 bis 16,65 Mol-% beträgt.

4. Formkörper nach einem der vorhergehenden Ansprüche, **dadurch gekennzeichnet, dass** das mindestens eine amorphe oder mikrokristalline Copolyamid (A)
eine Glasübergangstemperatur gemessen nach ISO 11537-2 (2013) von mindestens 155° C, bevorzugt mindestens 170 °C, insbesondere bevorzugt mindestens 180 °C, besonders bevorzugt mindestens 190 °C und ganz besonders bevorzugt 200 bis 240 °C und/oder eine Lichttransmission gemessen nach ASTM D 1003-13 (2013) an einer daraus hergestellten Platte mit 2 mm Dicke von mindestens 80 %, bevorzugt mindestens 85 % und besonders bevorzugt mindestens 90 % aufweist.

5. Formkörper nach einem der vorhergehenden Ansprüche, **dadurch gekennzeichnet, dass** das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3-ethyl-cyclohexyl)-methan, Bis-(4-amino-3,5-dimethyl-cyclohexyl)-methan, 2,6-Norbornandiamin oder 2,6-Bis-(aminomethyl)-nor-bornan, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus; und
(b) mindestens eine dimere Fettsäure ausgewählt aus der Gruppe bestehend aus dimeren Fettsäuren mit 36 oder 44 C-Atomen und Mischungen daraus; und
(c) mindestens eine aromatische Dicarbonsäure, ausgewählt aus der Gruppe bestehend aus Isophthalsäure, Terephthalsäure und Mischungen daraus; und gegebenenfalls
(d) mindestens eine aliphatische Dicarbonsäure ausgewählt aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,18-Octadecandisäure, 1,3-Cyclohexandicarbonsäure, 1,4-Cyclohexandicarbonsäure und Mischungen daraus.

6. Formkörper nach einem der vorhergehenden Ansprüche, **dadurch gekennzeichnet, dass** das mindestens eine amorphe oder mikrokristalline Copolyamid (A) zumindest die folgenden Monomere enthält:
(a) mindestens eine cycloaliphatische Diaminkomponente ausgewählt aus der Gruppe bestehend aus Bis-(4-amino-3-methyl-cyclohexyl)-methan, Bis-(4-amino-cyclohexyl)-methan, Bis-(4-amino-3,5-dimethyl-cyclohexyl)-methan und Mischungen daraus und bevorzugt ausgewählt ist aus der Gruppe bestehend aus Bis-(4-amino-3-methyl-cyclohexyl)-methan,Bis-(4-amino-3,5-dimethyl-cyclohexyl)-methan und Mischungen daraus; und
(b) mindestens eine dimere Fettsäure mit 36 C-Atomen; und
(c) Isophthalsäure und Terephthalsäure; und gegebenenfalls
(d) mindestens eine aliphatische Dicarbonsäure ausgewählt aus der Gruppe bestehend aus 1,12-Dodecandisäure, 1,14-Tetradecandisäure, 1,18-Octadecandisäure und Mischungen daraus.

7. Formkörper nach einem der vorhergehenden Ansprüche, **dadurch gekennzeichnet, dass** das mindestens eine amorphe oder mikrokristalline Copolyamid (A) als weiteres Monomer (d) mindestens eine aliphatische Dicarbonsäure mit 6 bis 22 Kohlenstoffatomen enthält.

8. Formkörper nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACM9/MACM36, MACMI/MACMCHD/MACM36, MACMI/MACM11/MACM36, MACMI/MACM13/MACM36, MACMI/MACM18/MACM36, MACMI/MACMT/MACM36, MACMI/MACM36, MACMI/MACMT/MACM12/MACM36, MACMI/MACMT/MACM14/MACM36,
MACMI/MACMT/MACM18/MACM36, MACMI/MACMT/MACM9/MACM36, MACMI/MACMT/MACM-CHD/MACM36, MACMI/MACMT/MACM12/MACMCHD/MACM36 und Mischungen daraus,
wobei MACM ganz oder teilweise durch TMACM ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann.

9. Formkörper nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACM18/MACM36, MACMI/MACMT/MACM36, MACMI/MACM36, MACMI/MACMT/MACM12/MACM36, MACMI/MACMT/MACM14/MACM36, MACMI/MACMT/MACM18/MACM36 und Mischungen daraus, wobei MACM ganz oder teilweise durch TMACM ersetzt sein kann, und/oder
wobei die dimere Fettsäure mit 36 Kohlenstoffatomen ganz oder teilweise durch eine dimere Fettsäure mit 44 Kohlenstoffatomen ersetzt sein kann.

10. Formkörper nach einem der vorhergehenden Ansprüche, **dadurch gekennzeichnet, dass** das mindestens eine amorphe oder mikrokristalline Copolyamid (A) ausgewählt ist aus der Gruppe bestehend aus MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 MACMI/MACM12/MACM36, MACMI/MACM14/MACM36, MACMI/MACMT/MACM36, MACMI/MACM36, MACMI/MACMT/MACM12/MACM36, MACMI/MACMT/MACM14/MACM36 und Mischungen daraus.

11. Formkörper nach einem der vorhergehenden Ansprüche, **dadurch gekennzeichnet, dass** die Copolyamid-Formmasse mindestens ein amorphes oder mikrokristallines Copolyamid (A) enthält, und gegebenenfalls mindestens einen anorganischen Füllstoff (B) und/oder gegebenenfalls mindestens einen Zusatzstoff (C), und/oder gegebenenfalls mindestens ein weiteres Polymer (D), welches verschieden vom Copolyamid (A) und verschieden vom Zusatzstoff (C) ist.

12. Formkörper nach einem der vorhergehenden Ansprüche, **dadurch gekennzeichnet, dass** die Copolyamid-Formmasse die folgende Zusammensetzung aufweist:
46 bis 100 Gew.-%, bevorzugt 57 bis 99,99 Gew.-% und besonders bevorzugt 63 bis 99,9 Gew.-% amorphes oder mikrokristallines Copolyamid (A), und
0 bis 50 Gew.-%, bevorzugt 0 bis 40 Gew.-% und besonders bevorzugt 0 bis 35 Gew.-% Füllstoff (B), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) bis (C) auf 100 Gew.-% ergänzen.

13. Formkörper nach einem der vorhergehenden Ansprüche, **dadurch gekennzeichnet, dass** die Copolyamid-Formmasse kein weiteres Polyamid und/oder Copolyamid, bevorzugt keinen weiteren thermoplastischen Kunststoff enthält.

14. Formkörper nach einem der vorhergehenden Ansprüche, **dadurch gekennzeichnet, dass** die Copolyamid-Formmasse die folgende Zusammensetzung aufweist:
96 bis 100 Gew.-%, bevorzugt 97 bis 99,99 Gew.-% und besonders bevorzugt 98 bis 99,9 Gew.-% amorphes oder mikrokristallines Copolyamid (A), und
0 bis 4 Gew.-%, bevorzugt 0,01 bis 3 Gew.-% und besonders bevorzugt 0,1 bis 2 Gew.-% Zusatzstoff (C),
wobei sich die Komponenten (A) und (C) auf 100 Gew.-% ergänzen.
